**Europäisches Patentamt**

**European Patent Office**

**Office européen des brevets**

(19)

(11) Numéro de publication: **0 201 369 B1**

(12) **FASCICULE DE BREVET EUROPEEN**

(45) Date de publication du fascicule du brevet:
**23.05.90**

(51) Int. Cl.⁵: **H04N 3/12**

(21) Numéro de dépôt: **86400651.5**

(22) Date de dépôt: **26.03.86**

(54) **Procédé de commande d'un dispositif d'affichage matriciel affichant des niveaux de.gris.**

(30) Priorité: **04.04.85 FR 8505146**

(43) Date de publication de la demande:
**17.12.86 Bulletin 86/46**

(45) Mention de la délivrance du brevet:
**23.05.90 Bulletin 90/21**

(84) Etats contractants désignés:
**CH DE GB IT LI NL**

(56) Documents cités:
**EP-A- 0 051 521**
**FR-A- 2 256 588**

(73) Titulaire: **COMMISSARIAT A L'ENERGIE ATOMIQUE, 31/33, rue de la Fédération, F-75015 Paris(FR)**

(72) Inventeur: **Clerc, Jean-Frédéric, 7, rue Casimir Brenier, F-38120 Saint Egreve(FR)**
Inventeur: **Sarrasin, Denis, 28, rue du grand François, F-38140 Rives Sur Fure(FR)**

(74) Mandataire: **Mongrédien, André et al, c/o BREVATOME 25, rue de Ponthieu, F-75008 Paris(FR)**

ACTORUM AG

## Description

La présente invention concerne un procédé de commande d'un dispositif d'affichage matriciel affichant des niveaux de gris.

Elle s'applique en particulier en optoélectronique et principalement dans la commande de cellules à cristal liquide, utilisées notamment comme convertisseurs d'informations électriques en informations optiques, pour le traitement des images optiques en temps réel, et pour l'affichage analogique.

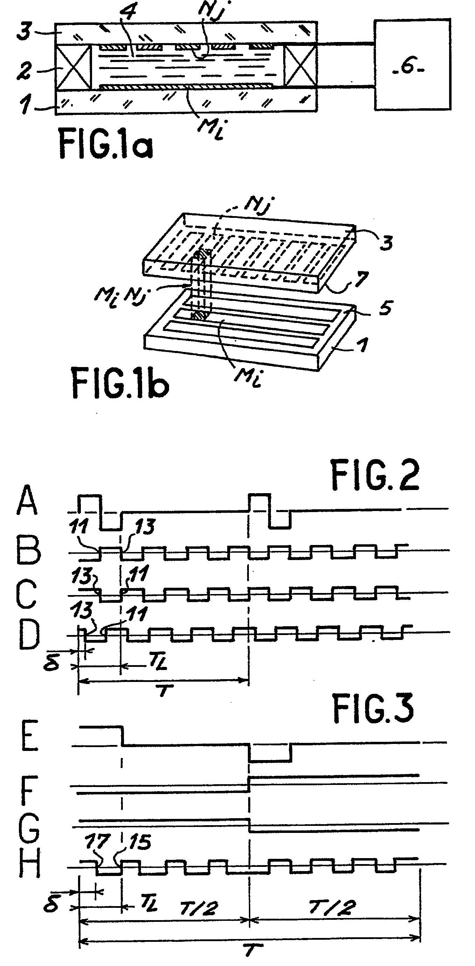

La figure 1a représente schématiquement un dispositif d'affichage matriciel à bandes croisées selon l'art antérieur, la figure 1b représentant ce dispositif en vue éclatée.

Sur la figure 1a sont représentées deux parois isolantes 1, 3 en regard l'une de l'autre, maintenues écartées par un joint de scellement 2 disposé sur leurs pourtours et entre lesquelles est introduit un matériau 4 possédant une caractéristique optique telle qu'une opacité, une transparence, une absorption, une diffusion, une biréfringence.

Sur la face interne de la paroi 1 est répartie une première famille de m lignes d'électrodes, notées $M_i$, parallèles, avec i entier tel que $1 \leq i \leq m$, constituées par des bandes conductrices continues et sur la face interne de l'autre paroi 3 est répartie une deuxième famille de p colonnes d'électrodes, notées $N_j$, parallèles, avec j entier tel que $1 \leq j \leq p$, constituées également par des bandes conductrices, les m lignes et les p colonnes d'électrodes étant croisées. Ces m lignes et ces p colonnes d'électrodes servent à véhiculer, respectivement, des signaux lignes et des signaux colonnes appropriés à l'excitation du matériau 4. Cette excitation peut être notamment électrique, magnétique ou thermique, elle dépend du matériau 4 intercalé entre les lignes et les colonnes d'électrodes. Les signaux d'excitation sont produits de façon connue par une source d'alimentation 6.

Sur la figure 1b, représentant ce dispositif en vue éclatée, on voit la première famille de m lignes d'électrodes, notées $M_i$ et la deuxième famille de p colonnes d'électrodes, notées $N_j$, réparties respectivement sur les parois 1 et 3.

Les m lignes et les p colonnes d'électrodes étant croisées, une zone $M_iN_j$ du matériau est définie par la région de recouvrement de la ligne $M_i$ et de la colonne $N_j$. Chaque zone $M_iN_j$ définit un point image élémentaire du dispositif d'affichage ; ce dernier comprend donc mxp points images répartis en matrice.

Dans le cas particulier du cristal liquide que l'on prendra comme exemple dans le reste du texte pour plus de clarté, l'excitation est du type électrique. Ainsi l'application de tensions électriques sur les lignes, notées $M_i$ et les colonnes, notées $N_j$, d'électrodes entraîne l'apparition d'un champ électrique au sein du cristal liquide dans les zones de recouvrement $M_iN_j$ correspondantes provoquant une orientation collective des molécules de cristal liquide dans ces zones.

En utilisant l'orientation sélective des molécules et l'excitation ponctuelle du cristal liquide, on fait apparaître une image sur l'ensemble du dispositif d'affichage en le définissant point par point.

Le chronogramme de la figure 2 permet de comprendre le principe de commande connu d'un dispositif d'affichage matriciel permettant d'afficher des niveaux de gris.

Le signal A représente la tension électrique appliquée à une électrode ligne $M_i$.

Les signaux B, C et D représentent les différentes tensions électriques appliquées à une électrode colonne $N_j$ suivant l'affichage désiré.

Les signaux A, B, C et D sont des signaux rectangulaires, d'amplitude alternativement positive puis négative et donc de moyenne nulle. L'inversion de polarité de ces signaux permet de protéger le matériau d'affichage, notamment 1e cristal liquide, des courants continus et de prolonger ainsi sa durée de vie.

Le signal A est un signal impulsionne1 de période T, T étant généralement de l'ordre de 40 ms. Le signal A est non nul uniquement pendant un temps ligne, noté $T_L$, et sa polarité s'inverse à la moitié du temps $T_L$. Le temps $T_L$ est égal à la période T divisée par le nombre de lignes m du dispositif d'affichage : $T_L = T/m$.

Chacune des lignes du dispositif d'affichage reçoit ainsi un signal ligne identique à celui représenté sur la figure 2 en A mais retardé d'un temps $t \times T_L$ par rapport à celui-ci, t étant un entier tel que $1 \leq t \leq m-1$.

Les signaux colonnes B, C et D sont continus, ce sont des signaux d'amplitude successivement positive, puis négative, et d'amplitude inférieure à celle des signaux lignes. L'amplitude de ces signaux présente un front de montée 11 et un front de descente 13 à chaque temps ligne $T_L$ et 2m fronts sur l'ensemble du temps T, m correspondant au nombre de lignes.

Sur cette figure, le signal colonne B est en opposition de phase avec le signal ligne A, pendant le premier temps $T_L$ de la période T.

Le signal résultant, pendant ce premier temps $T_L$, dans une zone $M_iN_j$, correspondant au recouvrement d'une ligne $M_i$ sur laquelle on applique le signal 1igne A et d'une colonne $N_j$ sur laquelle on applique le signal colonne B, est un signal dont l'amplitude est la somme des amplitudes, en valeur absolue, du signal ligne A et du signal colonne B. L'amplitude résultante est supérieure à celle de la tension de seuil $V_s$ du cristal liquide, $V_s$ correspondant à la tension minimale nécessaire pour exciter le cristal liquide. De ce fait, dans la zone de recouvrement $M_iN_j$, l'apparition d'un champ électrique va provoquer une orientation des molécules de cristal liquide dans cette zone $M_iN_j$ et l'affichage d'un point blanc.

Sur le reste du temps T, le signal ligne A étant nul, le signal résultant sera celui du signal colonne B. L'amplitude d'un signal colonne est inférieure à l'amplitude de la tension de seuil, le signal résultant est donc insuffisant pour exciter le matériau. Aussi, L'affichage résultant est celui obtenu lors du premier temps ligne $T_L$, c'est-à-dire blanc, le signal étant mémorisé sur le reste du temps T.

Le signal colonne C est identique au signal B, mais de polarité inverse. Il est donc en phase avec le signal ligne A pendant le premier temps $T_L$.

Le signal résultant pendant ce temps $T_L$, dans une zone $M_iN_j$ correspondant au recouvrement d'une ligne $M_i$, sur laquelle on applique un signal ligne A et d'une colonne $N_j$ sur laquelle on applique un signal colonne C est un signal dont l'amplitude est la différence des amplitudes, en valeur absolue, du signal ligne A et du signal colonne C. L'amplitude résultante est donc inférieure à celle de la tension de seuil $V_s$. Aussi, dans la zone de recouvrement $M_iN_j$, le cristal liquide n'est pas excité et on a l'affichage d'un point noir.

Sur le reste du temps T, comme précédemment, le signal résultant étant celui du signal colonne C, l'affichage résultant reste noir.

Le signal colonne D est identique à celui du signal C, mais en retard d'un temps δ par rapport à celui-ci, avec δ <$T_L$.

Ce signal D est intermédiaire entre le signal B et le signal C. Il est, pendant un temps ligne $T_L$, deux fois successivement en phase puis en opposition de phase avec le signal ligne A. Au point d'intersection $M_iN_j$ d'une ligne $M_i$ sur laquelle on applique un signal ligne A et d'une colonne $N_j$ sur laquelle on applique un signal colonne D, on a donc l'affichage de gris.

La différence de phase Δφ entre le signal ligne appliqué à une ligne $M_i$ et un signal colonne B, C ou D appliqué à une colonne $N_j$ détermine l'état d'affichage du point image $M_iN_j$:

$$\Delta\delta = 2\pi \frac{\delta}{T_L}$$

Aussi, lorsque Δφ=0, le point $M_iN_j$ est noir, lorsque Δφ=180°, le point $M_iN_j$ est blanc et enfin, lorsque O <Δφ<180° , le point $M_iN_j$ est gris.

En faisant varier Δφ, c'est-à-dire en faisant varier le retard δ du signal colonne, on peut obtenir différents niveaux de gris.

Les 2m fronts des différents signaux colonnes B, C et D à chaque période T sont à l'origine de phénomènes de couplage entre lignes et colonnes, provoquent une dégradation de l'image affichée.

Pour diminuer les phénomènes de couplage, on réduit, de façon connue, le nombre de fronts des signaux colonnes à chaque période T. Le chronogramme de la figure 3 représente les différents signaux appliqués aux lignes et aux colonnes d'électrodes suivant un procédé de commande connu permettant de diminuer les phénomènes de couplage.

Sur cette figure, le signal E représente le signal appliqué à une électrode ligne $M_i$ et les signaux F, G et H représentent les signaux appliqués à une électrode colonne $N_j$ suivant l'affichage désiré.

Ces signaux sont des signaux rectangulaires, périodiques, de période T. Ils subissent une inversion de polarité à chaque demi-période notée T/2.

Le signal ligne E est impulsionnel, il est non nul pendant un temps ligne $T_L$, avec $T_L$=T/(2.m), m représentant le nombre de lignes d'électrodes du dispositif d'affichage. Sur chaque ligne $M_i$, on applique un signal ligne du même type que le signal ligne E mais retardé d'un temps t×$T_L$ par rapport à celui-ci avec $1 \le t \le m-1$.

Le signal colonne F est continu, il présente seulement 2 fronts par période T. Il est en opposition de phase avec l'impulsion du signal ligne E et permet donc un affichage de blanc. De même, le signal colonne G est continu et présente 2 fronts par période. Il est en phase avec l'impulsion du signal ligne E et permet un affichage de noir.

Par contre, pour afficher du gris, le signal colonne H correspondant doit conserver pendant chaque temps $T_L$ au moins un front de montée 15 et un front de descente 17 pour être successivement en phase, puis en opposition de phase avec les différentes impulsions des signaux lignes. Le signal colonne présente donc 2(m-1) fronts sur une période T.

Le signal colonne H est en retard d'un temps δ par rapport au signal ligne E. La différence de phase Δφ entre ces signaux est donnée par la relation suivante :

$$\Delta\delta = \pi \frac{\delta}{T_L}$$

L'affichage de gris conduit donc également à des phénomènes de couplage entre les lignes d'électrodes et les colonnes d'électrodes sur lesquelles on applique un signal colonne H.

La demande de brevet EP-A 0 051 521 décrit un procédé de commande permettant d'afficher plusieurs niveaux de gris.

Dans ce procédé, on applique sur les lignes d'électrodes une série de signaux périodiques, de période T, et à valeur moyenne nulle. Ces signaux sont divisés à chaque période T en n fractions de temps différentes telles que la $k^{ième}$ fraction de temps soit égale à $2^{k-1}$ τ, où k est un entier tel que 1 $\le k \le$ n et τ un intervalle de temps utile à l'excitation du matériau, chaque fraction de temps étant suivie d'un temps mort μ.

Sur les colonnes d'électrodes, on applique une autre série de signaux périodiques, de période T et à valeur moyenne nulle. Ces signaux sont divisés également en n fractions de temps telles que la $k^{ième}$ fraction de temps soit de même durée que la $k^{ième}$ fraction de temps de la série des signaux lignes, ces signaux colonnes étant soit en phase, soit en opposition de phase avec ceux-ci.

Dans ce procédé de commande permettant d'afficher plusieurs niveaux de gris, il existe des phénomènes de couplage importants entre les lignes et les colonnes d'électrodes qui provoquent une dégradation de l'image affichée.

L'invention a pour but de remédier à ces inconvénients et notamment de diminuer les couplages entre les lignes et les colonnes d'électrodes d'un dispositif d'affichage, en répartissant n fractions de temps différentes, non plus à l'intérieur d'un signal ligne continu comme dans le procédé de commande décrit précédemment, mais dans des séquences d'adressage impulsionnelles successives.

De façon plus précise, l'invention a pour objet un procédé de commande d'un dispositif d'affichage matriciel, affichant des niveaux de gris comprenant un matériau d'affichage dont on peut modifier une caractéristique optique intercalée entre une première famille de m lignes d'électrodes, notées $M_i$, parallèles et une deuxième famille de p colonnes d'électrodes, notées $N_j$, parallèles, i et j étant des entiers tels que $1 \leq i \leq m$ et $1 \leq j \leq p$, les lignes et les colonnes étant croisées, une zone $M_iN_j$ du matériau étant définie par la région du matériau recouvert par la ligne $M_i$ et la colonne $N_j$, les lignes et les colonnes d'électrodes véhiculant des signaux provoquant une excitation du matériau, et dans lequel, on applique sur les lignes et les colonnes des signaux périodiques avec une période divisée en fractions de durées inégales, caractérisé en ce que, pour exciter la zone $M_iN_j$, on applique sur la ligne $M_i$ un signal ligne de période T avec inversion de polarité à chaque demi-période T/2, chaque demi-période T/2 étant divisée en n fractions de temps k de durées différentes, le signal ligne étant non nul et d'une certaine polarité pendant une partie 1/m de chaque fraction de temps et on applique sur la colonne $N_j$ un signal colonne de même période T, présentant pendant lesdites fractions de temps une polarité identique à ou inverse de celle du signal ligne, ledit signal colonne présentant au plus 2n inversions de polarité dans la période T, ces inversions se produisant au passage d'une fraction de temps à la suivante.

Selon un mode de commande, les n fractions de temps différentes sont telles que la $k^{ième}$ fraction de temps soit égale à $2(k-1)m\tau$ où k est un entier tel que $1 \leq k \leq n$, m représentant le nombre de lignes du dispositif d'affichage et $\tau$ un intervalle de temps utile à l'excitation du matériau.

Selon un autre mode de commande, à chaque fraction k de temps correspond un signal ligne non nul de durée $2^{(k-1)}\tau$.

Selon un autre mode de commande, les n fractions de temps ont des durées $2^{(k-1)}m\tau$ décroissantes, k variant de façon décroissante de n à 1.

Selon une variante du procédé de commande, les n fractions de temps ont des durées $2^{(k-1)}m \tau$ croissantes, k variant de façon croissante de 1 à n.

Selon un mode préféré du procédé de commande, les signaux appliqués aux lignes et aux colonnes d'électrodes sont des signaux rectangulaires.

Selon un autre mode préféré du procédé de commande, le matériau d'affichage est un film de cristal liquide, les signaux d'excitation appliqués aux lignes d'électrodes et aux colonnes d'électrodes étant des tensions électriques.

D'autres caractéristiques et avantages de l'invention ressortiront mieux de la description qui va suivre, donnée à titre purement illustratif et non limitatif. La description est faite en référence aux figures 1 à 4 annexées, dans lesquelles :

- les figures 1a et 1b, déjà décrites, représentent schématiquement, en coupe et en vue éclatée, un dispositif d'affichage matriciel à bandes croisées,

- la figure 2, déjà décrite, représente un chronogramme des différents signaux appliqués aux électrodes d'un dispositif d'affichage suivant un procédé de commande connu,

- la figure 3, déjà décrite, représente un chronogramme des différents signaux appliqués aux électrodes d'un dispositif d'affichage permettant de diminuer une partie des couplages entre les électrodes lignes et les électrodes colonnes suivant un principe de commande également connu,

- la figure 4 représente le chronogramme des signaux appliqués aux électrodes lignes et aux électrodes colonnes suivant le procédé de commande conforme à l'invention.

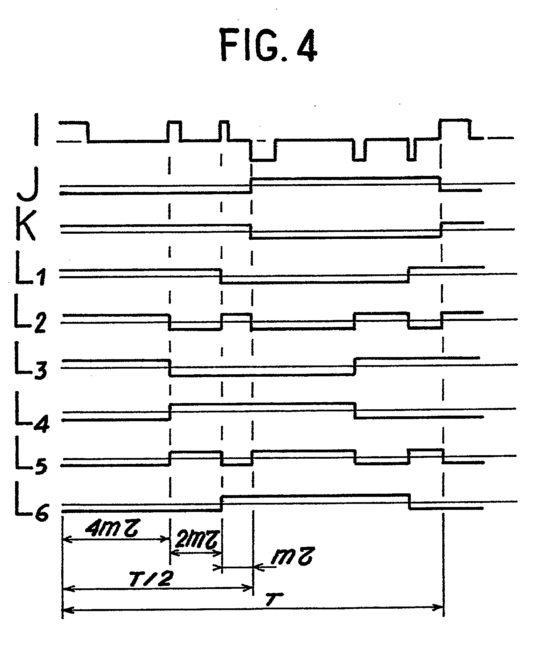

Sur la figure 4 est représenté un signal ligne I appliqué à une électrode ligne $M_i$ et des signaux colonnes J, K, $L_1$, $L_2$, $L_3$, $L_4$, $L_5$ et $L_6$ appliqués à une électrode colonne $N_j$, suivant l'affichage désiré. Le signal J permet l'affichage de blanc, le signal K de noir et les signaux $L_g$, avec g entier tel que $1 \leq g \leq 6$ dans cet exemple, permettent l'affichage de 6 gris différents.

Ces signaux sont périodiques, de période T avec inversion de polarité à chaque demi-période T/2. Les signaux représentés sont rectangulaires mais ils auraient pu être par exemple sinusoïdaux. Chaque demi-période est divisée selon le procédé de l'invention en n fractions de temps différentes, chaque fraction k de temps ayant une durée de $2^{(k-1)}m\tau$ où k est un entier tel que $1 \leq k \leq n$, m représente le nombre de lignes du dispositif d'affichage et $\tau$ un intervalle de temps utile à l'excitation du matériau, notamment du cristal liquide. Ces n fractions de temps sont réparties sur chaque demi-période T/2 soit en durée croissante, k variant de 1 à n, soit en durée décroissante comme dans l'exemple de la figure, k variant alors de n à 1.

Le signal ligne I est impulsionnel, il est non nul sur chaque fraction de temps $2^{(k-1)}m\tau$ pendant $1/m^{ième}$ de ce temps, c'est-à-dire pendant $2^{(k-1)}\tau$ appelé temps ligne $T_L$. Les m lignes de la cellule reçoivent chacune un signal du même type que celui représenté en I, mais retardé de $t \times T_L$ avec $1 \leq t \leq (m-1)$.

Dans l'exemple de la figure, chaque demi-période est divisée en trois fractions de temps (n=3) de durée décroissante, k prenant successivement les valeurs 3, 2 et 1. Ainsi, ces trois fractions de temps ont des durées respectives de $4m\tau$, $2m\tau$ et enfin $m\tau$. Le signal ligne I est donc non nul sur chaque fraction k de temps pendant $1/m^{ième}$ de ce temps, c'est-à-dire pendant un temps respectivement de $4\tau$, $2\tau$ et $\tau$.

Le signal colonne J est d'amplitude négative pendant la première demi-période T/2 puis positive pendant la deuxième demi-période T/2. Ce signal J est donc en opposition de phase avec le signal ligne I à chaque fois que celui-ci est non nul. La superposition d'un signal ligne et du signal colonne J permet donc d'afficher du blanc.

De même, le signal colonne K est d'amplitude positive pendant la première demi-période T/2 puis négative pendant la deuxième demi-période T/2. Ce signal K est donc en phase avec les impulsions non nulles du signal ligne I. La superposition d'un signal ligne et du signal colonne K permet donc d'afficher du noir.

Les différents signaux, notés $L_g$ avec $1 \leq g \leq 6$ sont intermédiaires des signaux J et K.

Ces signaux sont d'amplitudes alternativement positives et négatives le changement de polarité s'effectuant au passage d'une fraction de temps à une autre. Chaque signal $L_g$ est donc au moins une fois en phase et en opposition de phase avec chacun des signaux lignes, sur une demi-période T/2.

Dans l'exemple de la figure, chaque demi-période étant divisée en 3 fractions de temps, le nombre de fronts de ces signaux colonnes n'excède pas le nombre 3. On a de cette manière, 6 façons de faire varier la polarité d'un signal pour avoir des signaux colonnes $L_g$ différents entre eux et présentant au moins une amplitude positive et négative sur une demi-période T/2. Ces signaux $L_g$ permettent donc d'afficher 6 niveaux de gris différents.

Ainsi, pour n fractions de temps, on a $2^n$ signaux colonnes dont un signal colonne permettant d'afficher du blanc et un autre du noir. On peut donc avoir pour n fractions de temps $2^n-2$ signaux colonnes permettant d'afficher du gris. Le choix de n permet d'obtenir un nombre plus ou moins important de niveaux de gris.

Chacun des signaux colonnes présente un nombre de fronts inférieur ou égal à 2n sur une période T, n représentant le nombre de fractions de temps divisant une demi-période T/2. Ce procédé de commande a donc permis de diminuer le nombre de fronts des signaux colonnes par rapport à ceux connus de l'art antérieur et donc de diminuer les couplages entre lignes et colonnes.

**Revendications**

1. Procédé de commande d'un dispositif d'affichage matriciel, affichant des niveaux de gris, comprenant un matériau (4) dont on peut modifier une caractéristique optique intercalée entre une première famille de m lignes d'électrodes, notées $M_i$, parallèles et une deuxième famille de p colonnes d'électrodes, notées $N_j$, parallèles, i et j étant des entiers tels que $1 \leq i \leq m$ et $1 \leq j \leq p$, les lignes et les colonnes étant croisées, une zone $M_iN_j$ du matériau étant définie par la région du matériau recouvert par la ligne $M_i$ et la colonne $N_j$, les lignes et les colonnes d'électrodes servant à véhiculer des signaux provoquant une excitation du matériau, et dans lequel on applique sur les lignes et les colonnes des signaux périodiques avec une période divisée en fractions de durées inégales, caractérisé en ce que, pour exciter la zone $M_iN_j$, on applique sur la ligne $M_i$ un signal ligne (I) de période T avec inversion de polarité à chaque demi-période T/2, chaque demi-période T/2 étant divisée en n fractions de temps (k) de durées différentes, le signal ligne (I) étant non nul et d'une certaine polarité pendant une partie 1/m de chaque fraction de temps et on applique sur la colonne $N_j$ un signal colonne (J, K, L...) de même période T, présentant pendant lesdites fractions de temps une polarité identique à ou inverse de celle du signal ligne (I), ledit signal colonne (J, K, L...) présentant au plus 2n inversions de polarité dans la période T, ces inversions se produisant au passage d'une fraction de temps à la suivante.

2. Procédé de commande selon la revendication 1, caractérisé en ce que les n fractions de temps différentes sont telles que la $k^{ième}$ fraction de temps soit égale à $2^{(k-1)}m\tau$ où k est un entier tel que $1 \leq k \leq n$, m représentant le nombre de lignes du dispositif d'affichage et $\tau$ un intervalle de temps utile à l'excitation du matériau (4).

3. Procédé de commande selon l'une quelconque des revendications 1 et 2, caractérisé en ce qu'à chaque fraction k de temps correspond un signal ligne (I) non nul de durée $2^{(k-1)}\tau$.

4. Procédé de commande selon l'une quelconque des revendications 1 à 3, caractérisé en ce que les n fractions de temps ont des durées $2^{(k-1)}m \tau$ décroissantes, k variant de façon décroissante de n à 1.

5. Procédé de commande selon l'une quelconque des revendications 1 à 3, caractérisé en ce que ces n fractions de temps ont des durées $2^{(k-1)}m \tau$ croissantes, k variant de façon croissante de 1 à n.

6. Procédé de commande selon l'une quelconque des revendications 1 à 5, caractérisé en ce que les signaux (I, J, K, $L_1$,..., $L_6$) appliqués aux lignes et aux colonnes d'électrodes sont des signaux rectangulaires.

7. Procédé de commande selon l'une quelconque des revendications 1 à 6, caractérisé en ce que le matériau (4) est un film de cristal liquide, les signaux d'excitation (I, J, K, $L_1$,..., $L_6$) appliqués aux lignes d'électrodes et aux colonnes d'électrodes étant des tensions électriques.

**Claims**

1. Process for the control of a matrix display means, which displays grey levels and comprising a display material (4), whereof it is possible to modify an optical characteristic inserted between a first group of m parallel rows of electrodes $M_i$, and a second group of p parallel columns of electrodes $N_j$, i and j being integers such that $1 \leq i \leq m$ and $1 \leq j \leq p$, the rows and columns crossing, one zone $M_iN_j$ of the material being defined by the region of the material covered by row $M_i$ and column $N_j$, the rows and columns of electrodes carrying signals causing an excitation of the material and in which to the rows and columns are applied periodic signals with a period divided into fractions of unequal durations, characterized in that in order to excite zone $M_iN_j$, to row $M_i$ is applied a row signal (I) of period T with polarity inversion for each half-period T/2, each half-period T/2 being subdivided into n time fractions k of different durations, the row signal not being zero and having a certain polarity for part 1/m of each time fraction and to the column $N_j$ is applied a column signal (J, k, L, etc.) of the same period T having during said time fractions a polarity identical to or the reverse of that of the row signal (I), said column signal (J, k, L, etc.) having at the most 2n polarity inversions in the period T, said inversions occurring on passing from one time fraction to the next.

2. Control process according to claim 1, characterized in that the n different time fractions are such that kth time fraction is equal to $2^{(k-1)}m\tau$, in which k is an integer such that $1 \leq k \leq n$, m representing the number of rows of the display means and $\tau$ a time interval useful for exciting the material (4).

3. Control process according to either of the claims 1 and 2, characterized in that to each time fraction k corresponds a non-zero row signal (I) of duration $2^{(k-1)}\tau$.

4. Control process according to any one of the claims 1 to 3, characterized in that the n time fractions have decreasing durations $2^{(k-1)}m\tau$, k varying in decreasing manner from n to 1.

5. Control process according to any one of the claims 1 to 3, characterized in that the n time fractions have increasing durations $2^{(k-1)}m\tau$, k varying in increasing manner from 1 to n.

6. Control process according to any one of the claims 1 to 5, characterized in that the signals (I, J, k, $L_1 ... L_6$) applied to the rows and columns of electrodes are square-wave signals.

7. Control process according to any one of the claims 1 to 6, characterized in that the material (4) is a liquid crystal film, the exciting signals (I, J, k, $L_1 .... L_6$) applied to the rows of electrodes and columns of electrodes being voltages.

**Patentansprüche**

1. Verfahren zur Steuerung einer Graustufen anzeigenden Matrixanordnung mit einem Material (4), von dem man eine optische Eigenschaft verändern kann, das zwischen einer ersten Familie von m parallelen Elektrodenzeilen, $M_i$ bezeichnet, und einer zweiten Familie von p parallelen Elektrodenspalten, $N_j$ bezeichnet, angeordnet ist, wobei i und j ganze Zahlen sind, wobei $1 \leq i \leq m$ und $1 \leq j \leq p$ ist, wobei die Zeilen und Spalten sich kreuzen, wobei eine Zone $M_iN_j$ des Materials durch ein von der Zeile $M_i$ und der Spalte $N_j$ bedecktes Gebiet des Materials gebildet wird, wobei die Elektrodenzeilen und -spalten dazu dienen, Signale zu leiten, die eine Erregung des Materials bewirken, und bei dem man auf die Zeilen und Spalten periodische Signale mit einer in Bruchteile ungleicher Dauer geteilten Periode anwendet, dadurch gekennzeichnet, daß man zur Erregung der Zone $M_iN_j$ auf die Zeile $M_i$ ein Zeilensignal (I) mit Periode T mit Inversion der Polarität bei jeder Halbperiode T/2 anwendet, wobei jede Halbperiode T/2 in n Zeitintervalle (k) verschiedener Dauer unterteilt ist, wobei das Zeilensignal (I) nicht Null und von einer bestimmten Polarität während eines Teils 1/m jedes Zeitintervalls ist, und daß man auf die Spalte $N_j$ ein Spaltensignal (J, K, L ...) derselben Periode T anwendet, die während der Zeitintervalle eine der Polarität des Zeilensignals (I) identisch oder inverse Polarität aufweist, wobei das Spaltensignal zusätzlich 2n Polaritätsumkehrungen in der Periode T aufweist, wobei sich diese Umkehrungen bei Übergang von einem Zeitintervall zum nächsten ereignen.

2. Verfahren zur Steuerung nach Anspruch 1, dadurch gekennzeichnet, daß die verschiedenen Zeitintervalle derart sind, daß das k-te Intervall der Zeit gleich ist $2^{(k-1)}m\tau$, wobei k eine ganze Zahl ist mit $1 \leq k \leq n$, m die Zahl der Zahlen der Anzeigeanordnung und $\tau$ ein für die Anregung des Materials (4) nützliches Zeitintervall ist.

3. Verfahren zur Steuerung nach einem der Ansprüche 1 und 2, dadurch gekennzeichnet, daß jedes Intervall k der Zeit ein Zeilensignal (I), das nicht Null ist, der Dauer $2^{(k-1)}\tau$ entspricht.

4. Verfahren zur Steuerung nach einem der Ansprüche 1 und 3, dadurch gekennzeichnet, daß die n Intervalle der Zeit abnehmende Dauern $2^{(k-1)}m\tau$ besitzen, wobei k von n bis 1 abnimmt.

5. Verfahren zur Steuerung nach einem der Ansprüche 1 und 3, dadurch gekennzeichnet, daß die n Intervalle der Zeit zunehmende Dauern $2^{(k-1)}m\tau$ besitzen, wobei k von 1 bis n zunimmt.

6. Verfahren zur Steuerung nach einem der Ansprüche 1 und 5, dadurch gekennzeichnet, daß die auf die Zeilen und Spalten angewandten Signale (I, J, K, $L_1,...., L_6$) Rechtecksignale sind.

7. Verfahren zur Steuerung nach einem der Ansprüche 1 und 6, dadurch gekennzeichnet, daß das Material (4) ein Flüssigkristallfilm ist, wobei die auf die Zeilen und Spalten angewandten Erregungssignale (I, J, K, $L_1,...L_6$) elektrische Spannungen sind.

FIG.1a

FIG.1b

FIG.2

FIG.3

# FIG. 4